# EUROPEAN PATENT SPECIFICATION

(11) **EP 3 023 197 B1**
(45) Date of publication and mention of the grant of the patent: **30.03.2022**
(21) Application number: 15193059.1
(22) Date of filing: 04.11.2015
(51) Int. Cl.: B24B 23/03, B24B 41/00

(54) **POWER TOOL WITH COUNTERWEIGHT ARRANGEMENT**
ELEKTROWERKZEUGGEGENGEWICHTANORDNUNG
OUTIL ÊLECTRIQUE AVEC DISPOSITIF DE CONTREPOIDS

(30) Priority: 04.11.2014 US 201462074936 P; 28.10.2015 US 201514925671
(43) Date of publication of application: 25.05.2016
(73) Proprietor: Black & Decker Inc., New Britain, CT 06053 (US)
(72) Inventor: MILLER, Philip T., Phoenix, MD 21131 (US); SIDES, Daniel H., Jr., New Freedom, PA 17349 (US); ZHANG, Qiang John, Lutherville, MD 21093 (US); DOEHNER, Thomas F., Timonium, MD 21093 (US)
(74) Representative: SBD IPAdmin

(56) References cited:
- EP-A2- 0 203 255
- EP-A2- 1 586 416
- WO-A1-02/24408
- US-A- 2 918 761
- US-A- 3 364 625
- US-A- 4 854 085
- US-A1- 2005 197 052

## Description

This document relates, generally, to a power tool, and in particular, to a power tool for sanding a workpiece.

### Background

Power tools, and in particular, power tools used to provide a desired surface finish on a workpiece, may include, for example, polishers, sheet sanders, random orbit sanders, and the like. Some of these types of power tools may employ an eccentric motion to remove material from the surface of the workpiece, and improve surface finish.

Examples of power tools of this type of the prior art are disclosed in EP0203255, US2005197052, WO0224408 and EP1586416.

Document EP 203 255 A discloses an example of a power tool as per the preamble of claim 1.

According to the invention, there is provided a power tool in accordance with claim 1.

The details of one or more implementations are set forth in the accompanying drawings and the description below. Other features will be apparent from the description and drawings, and from the dependent claims.

### Brief description of the drawings

FIG. 1A is a perspective view of an example implementation of an eccentric motion power tool, and FIG. 1B is an exploded view of the tool shown in FIG. 1A.
FIGs. 2A and 2B are bottom views of a sanding tool, and FIG. 2C is a cross-sectional view of the sanding tool shown in FIGs. 2A and 2B, in accordance with embodiments as broadly described herein.
FIG. 2D is a graph of vibration levels of sanding tools having counterweights positioned at varying offset angles, and with varying orbit radii, in accordance with embodiments as broadly described herein.
FIG. 3A is a bottom view of a sanding tool, and FIG. 3B is a cross-sectional view of the sanding tool shown in FIG. 3A, in accordance with embodiments as broadly described herein.

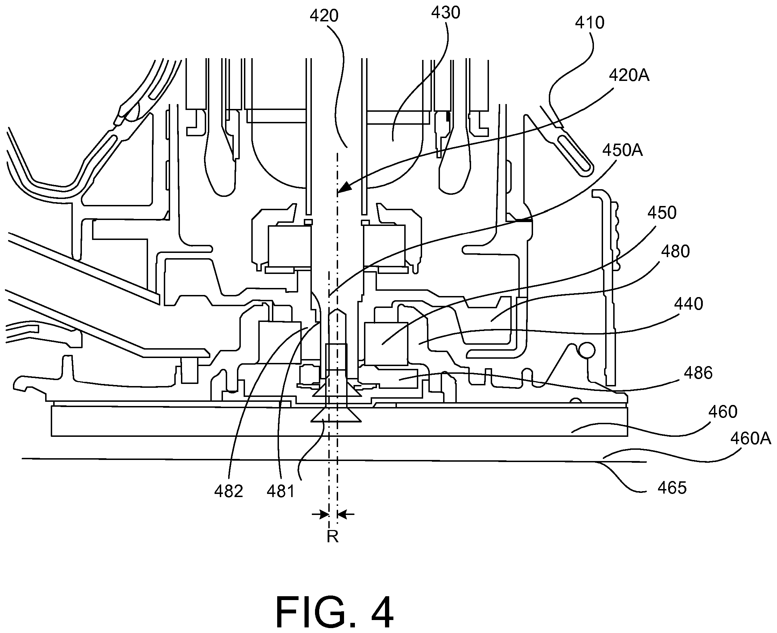

FIG. 4 is a cross-sectional view of a sanding tool, in accordance with embodiments as broadly described herein.

### Detailed description

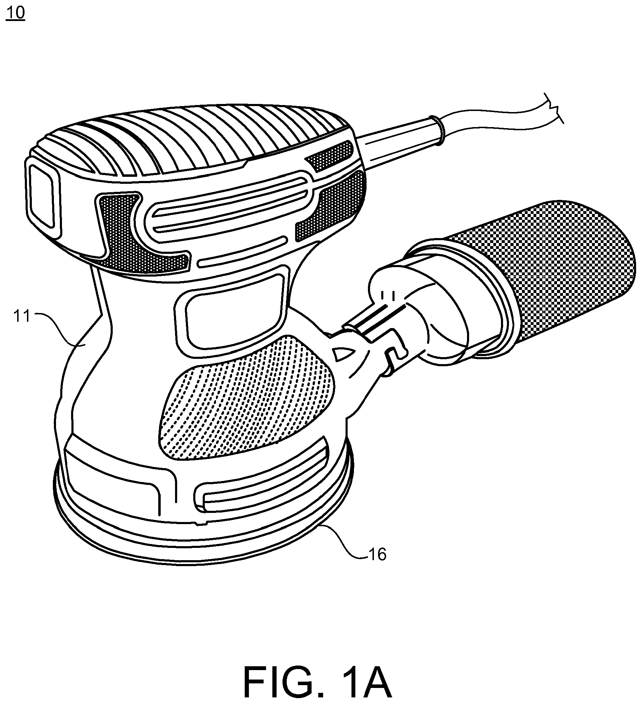

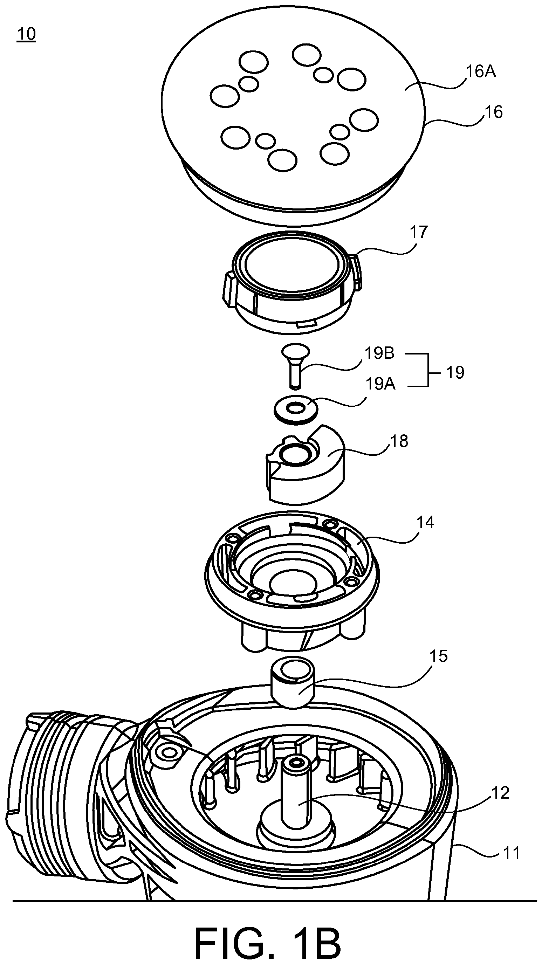

An example implementation of an eccentric motion power tool is shown in FIGs. 1A-1B. The exploded view of the example sanding tool 10 shown in FIG. 1B illustrates a housing 11 in which a motor is received, the motor rotating a drive shaft 12. A sanding platen 16, or sanding pad 16, may include a substantially planar outer surface 16A to which an abrasive finishing sheet, such as, for example, sandpaper may be affixed. A bearing retainer 14 may be positioned on an inner surface of the platen 16, at a location that is eccentric to the drive shaft 12, with an eccentric sleeve 15 coupling the drive shaft 12 to the retainer bearing 14, to convert the rotational force of the motor transmitted by the drive shaft 12 into an orbital movement of the platen 16.

To counteract imbalance in the eccentric coupler 15 / retainer bearing 14 / platen 16 generated due to the eccentric coupling of the platen 16 to the drive shaft 12 during operation, according to the invention, the tool 10 includes a counterweight 18 coupled to the drive shaft 12. A coupling device 19, such as, for example, a washer 19A and a fastener 19B, may couple the counterweight 18 in position at the end of the drive shaft 12, with a dust cap 17 covering the assembled counterweight 18 and drive shaft 12. The counterweight 18 is positioned opposite the center of gravity of the platen 16, for example, approximately 180 degrees from the center of gravity of the platen 16. Positioning of the counterweight 18 in this manner may counteract imbalance and reduce vibration when the motor is rotating the drive shaft 12. However, when the platen 16, and in particular, a sheet of sandpaper attached to the outer surface 16A of the platen 16, contacts a workpiece during operation, vibration of the tool 10 may increase due to additional external forces introduced by resistance between the finishing surface of the workpiece and the sandpaper.

To counteract an additional force, or force vector, generated due to the resistance between the finishing surface of the workpiece and the sandpaper, in some embodiments, the counterweight may be arranged at a relatively small offset angle with respect to an orbit radius axis. In some embodiments, the counterweight may be positioned as close to the source of this additional vibration and/or imbalance as possible, for example, as close to the lower surface of the platen as possible, for example, between the bearing retainer and the lower surface of the platen. Arranging the counterweight at a relatively small offset angle with respect to the orbit axis radius, and/or arranging the counterweight as close to the lower surface of the platen as possible may balance the rotating masses to reduce vibration and counteract the force vector generated due to the interaction between the sandpaper and the workpiece, thus reducing effective vibration of the tool engaged with a workpiece during operation.

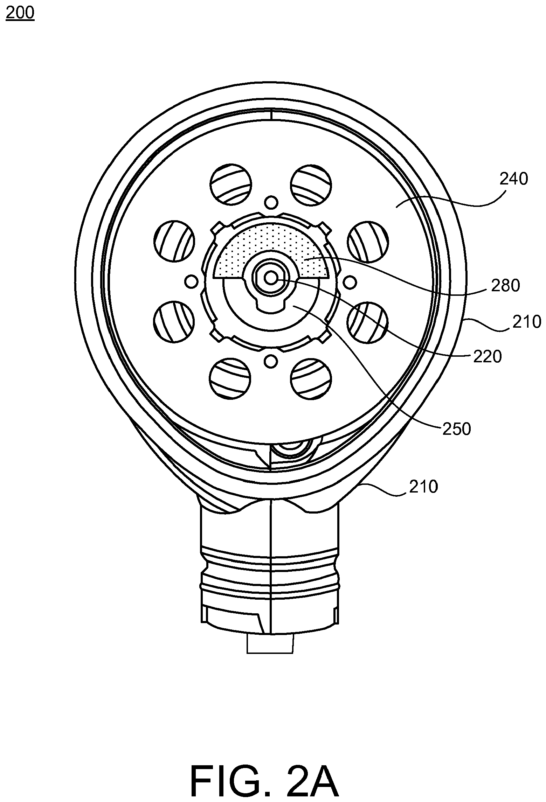

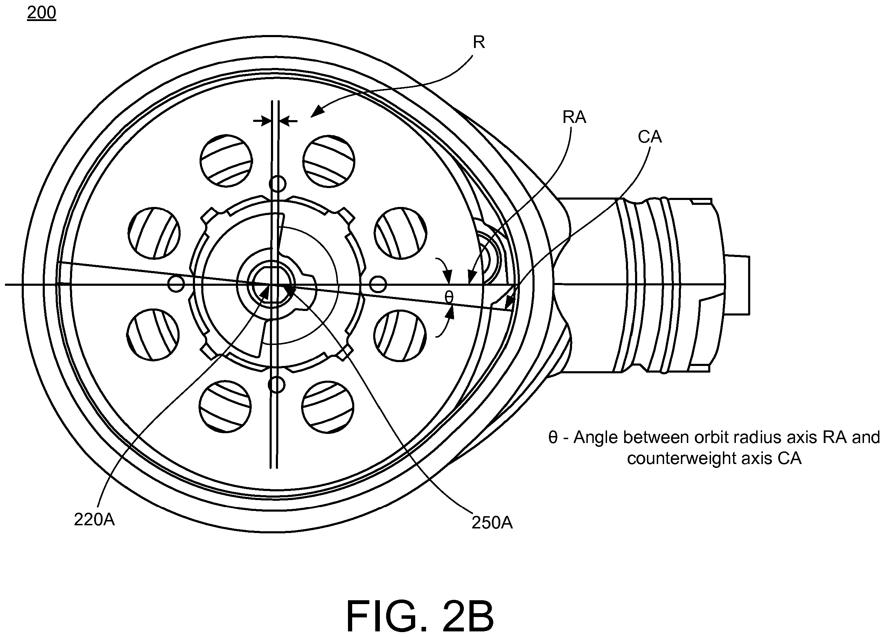

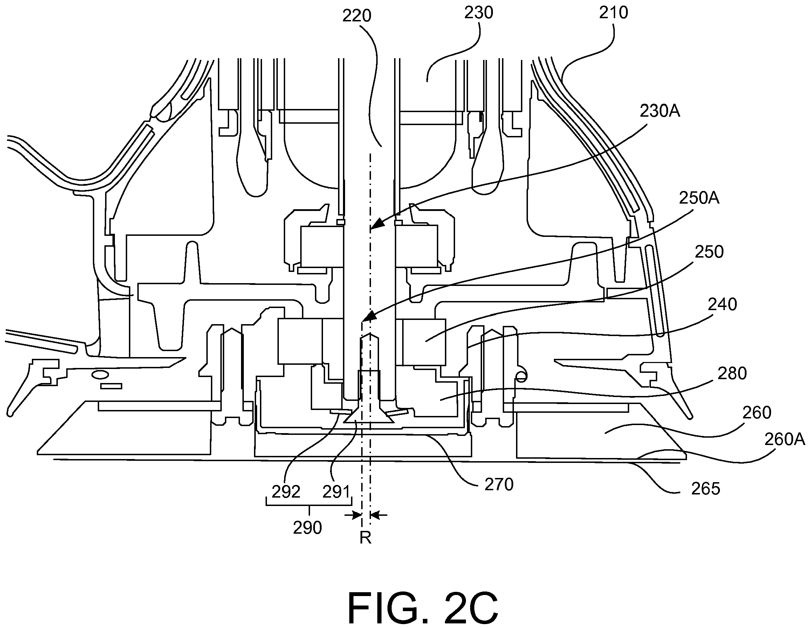

FIGs. 2A and 2B are bottom views of a sanding tool 200, in accordance with an example implementation as broadly described herein, with a platen and a dust cap of the sanding tool 200 removed so that an arrangement of internal components is visible, and FIG. 2C is a cross-sectional view of the sanding tool 200 shown in FIGs. 2A and 2B.

As shown in FIGs. 2A and 2B, the tool 200 may include a housing 210 in which a drive shaft 220 driven by a motor 230 is housed. The drive shaft 220 may be rotated by the motor 230 about a driven shaft centerline 220A. An eccentric sleeve 250 is eccentrically positioned around a distal end portion of the drive shaft 220, centered about an eccentric mass centerline 250A that is offset from the driven shaft centerline 220A. The eccentric sleeve 250 is retained by a bearing retainer 240 surrounding the eccentric sleeve 250, with the bearing retainer 240 coupled to an inner surface portion of a platen 260, or sanding pad 260. The platen 260 may include an outer surface 260A to which an abrasive sheet 265, such as sandpaper, may be affixed. A counterweight 280 is coupled to the distal end of the drive shaft 220, between the bearing retainer 240/eccentric sleeve 250 and the platen 260. A coupling device 290, including, for example, a fastener 291extending through a washer 292 positioned in a recess of the counterweight 280 and into the distal end portion of the drive shaft 220, may couple the counterweight 280 in position relative to the bearing retainer 240, eccentric sleeve 250 and drive shaft 220, with a dust cap 270 positioned between the end of the assembled components and the platen 260.

As shown in FIGs. 2B and 2C, an orbit radius R is defined by a distance between the driven shaft centerline 220A and the eccentric mass centerline 250A, with an orbit radius axis RA defined by a line extending laterally through the longitudinally extending driven shaft centerline 220A and the longitudinally extending eccentric mass centerline 250A. A counterweight axis CA is defined by a line radially bisecting the counterweight 280, with an angle θ formed between the orbit radius axis RA and the counterweight axis CA. The angle θ defines an offset angle of the counterweight 280 with respect to the orbit radius axis RA. Offset of the counterweight 280, for example by the offset angle θ, and proximity of the counterweight 280 to the outer surface 260A of the platen 260, may counteract imbalance, and may reduce vibration of the tool 200 engaged with a workpiece during operation.

According to the invention, offset angle θ is greater than 3.0 and less than or equal to 9.0 degrees to achieve a desired reduction in vibration levels. In some embodiments, the offset angle θ may be greater than 3.0 degrees and less than or equal to 6.0 degrees to achieve a desired reduction in vibration levels. In some embodiments, the offset angle θ may be between approximately 6.0 degrees and 9.0 degrees to achieve a desired reduction in vibration levels. In some embodiments, arrangement of the counterweight so that a portion of the counterweight mass is located as close to the plane of the workpiece as possible, and at an relatively small offset angle with respect to the orbit radius, as described above, may reduce vibration by up to approximately 40%, depending on, for example, orbit radius, operation speed and the like. For example, in one implementation, a tool vibration level, when the tool is actively engaged with a workpiece during operation, may be less than approximately 2.5 m/s². Various combinations of orbit radius R, offset angle θ and resulting reductions in vibration levels are shown in Table 1 below.

**Table 1**

| Combination | Orbit Radius R (mm) | Angle θ (Degrees) | Unit 1 | Vibration Unit 2 | (m/s²) Unit 3 |
|---|---|---|---|---|---|
| 1 | 1.3 | 0 | 4.1 | | 4.4 |
| 2 | 1.3 | 3 | 3.0 | 3.1 | 2.8 |
| 3 | 1.3 | 6 | 2.9 | 2.6 | 3.1 |
| 4 | 1.3 | 9 | 3.8 | 4.2 | 4.6 |
| 5 | 1.3 | 12 | 6.0 | - | - |
| 6 | 1.4 | 0 | 3.8 | - | - |
| 7 | 1.4 | 3 | 2.9 | 3.1 | 3.1 |
| 8 | 1.4 | 6 | 2.5 | 1.8 | 2.7 |
| 9 | 1.4 | 9 | 2.4 | 2.7 | 3.0 |
| 10 | 1.4 | 12 | 2.9 | 3.1 | - |
| 11 | 1.4 | 15 | - | 4.4 | - |
| 12 | 1.2 | 3 | 3.1 | 3.4 | 3.4 |
| 13 | 1.2 | 6 | 3.1 | 3.0 | 3.1 |
| 14 | 1.2 | 9 | 4.7 | 5.3 | 4.2 |

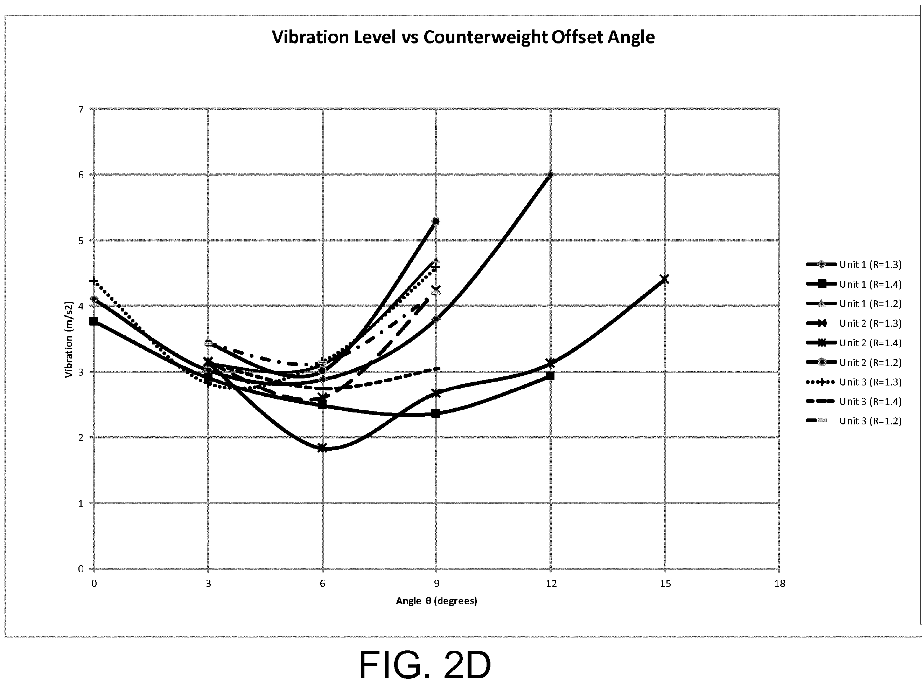

As shown in Table 1 above, and in the graph of FIG. 2D, example implementations of sanding tools, units 1, 2 and 3, may achieve varying reductions in vibration level when the counterweight is positioned at a relatively small offset angle θ. The graph shown in FIG. 2D illustrates vibration levels for three different units 1, 2 and 3, taken at three different orbit radii (1.2mm, 1.3mm and 1.4mm), ranging from an offset angle θ of approximately 0.0 degrees to an offset angle θ of approximately 12.0 degrees.

For example, in a first example implementation of a sanding tool represented by combination 3 in Table 1, an example orbit radius of 1.3mm and an offset angle of approximately 6.0 degrees may result in a vibration level of approximately 2.6m/s², resulting in an approximately 30% reduction in vibration compared to the same tool having an orbit radius of 1.3mm, but with the counterweight aligned with the driven shaft centerline (i.e., an offset angle of 0.0 degrees). In a second example implementation, represented by combination 8 in Table 1, an example orbit radius of 1.4mm and an offset angle of approximately 6.0 degrees may result in a vibration level of approximately 2.5m/s², resulting in an approximately 34% reduction in vibration compared to the same tool having an orbit radius of 1.4mm, but with the counterweight aligned with the driven shaft centerline (i.e., an offset angle of 0.0 degrees). In a third example implementation, represented by combination 9 in Table 1, an example orbit radius of 1.4mm and an offset angle of approximately 9.0 degrees may result in a vibration level of approximately 2.4m/s², resulting in an approximately 37% reduction in vibration compared to the same tool having an orbit radius of 1.4mm, but with the counterweight aligned with the driven shaft centerline (i.e., an offset angle of 0.0 degrees).

As noted above, arrangement of the counterweight so that at least a portion of the counterweight mass is located as close to the plane of the workpiece as possible, and at an relatively small offset angle with respect to the orbit radius, rather than aligned with the driven shaft centerline, as described above, may reduce vibration to varying degrees, depending on various factors associated with a particular tool implementation, such as, for example, orbit radius, operation speed and the like.

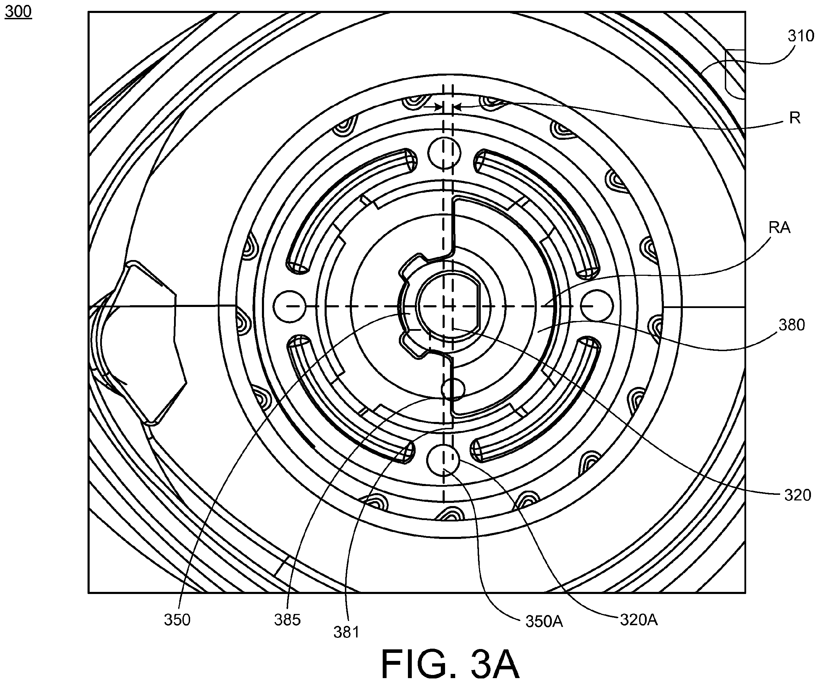

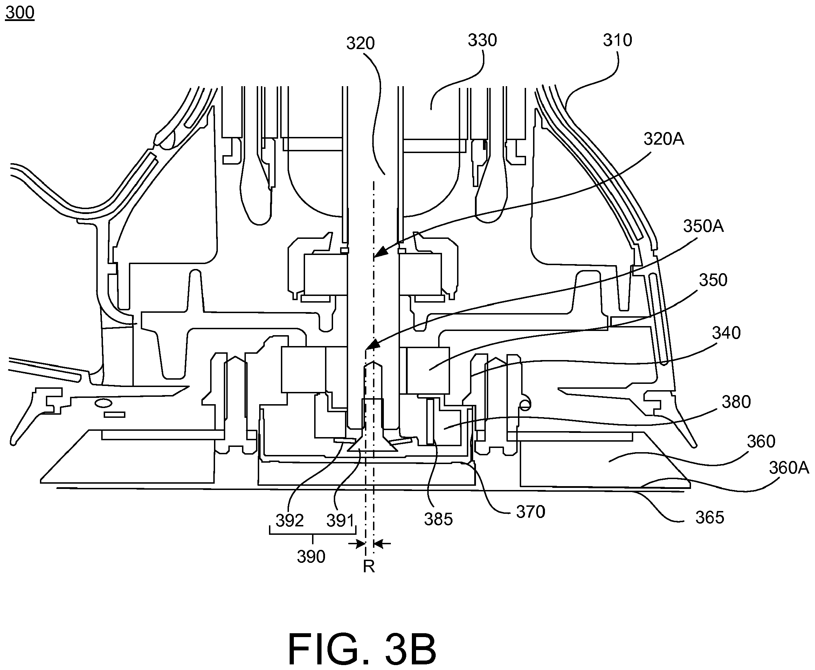

FIG. 3A is a bottom view of a sanding tool 300, in accordance with an example implementation as broadly described herein, with a platen and a dust cap of the sanding tool 300 removed so that an arrangement of internal components is visible, and FIG. 3B is a cross-sectional view of the sanding tool 300 shown in FIG. 3A.

The tool 300 includes a housing 310 housing a drive shaft 320 driven by a motor 330 to rotate about a driven shaft centerline 320A, with an eccentric sleeve 350 eccentrically positioned around a distal end portion of the drive shaft 320, centered about an eccentric mass centerline 350A, and retained by a bearing retainer 340 that is coupled to an inner surface portion of a platen 360, similar to the tool 200 described above with respect to FIGs. 2A-2C. The platen 360 includes an outer surface 360A to which an abrasive sheet 365, such as sandpaper, may be affixed. A counterweight 380 is coupled to the distal end of the drive shaft 320, between the bearing retainer 340/eccentric sleeve 350 and the platen 360, by a coupling device 390, including, for example, a fastener 391 and a washer 392, with a dust cap 370 positioned between the end of the assembled components and the platen 360.

The counterweight 380 may include a counterforce mass member 385. The counterforce mass member 385 may be coupled to, or affixed to, or integral to the counterweight 380, and may be positioned to a particular sector of the counterweight 380, such as, for example, along a diameter line 381 of the counterweight 380. The counterforce mass member 385 may be made of the same material as the counterweight 380, or may be made of a different material than the counterweight 380. In the example implementation shown in FIGs. 3Aand 3B, the counterforce mass member 385 is substantially cylindrical. However, a shape or contour, relative size, and/or positioning of the counterforce mass member may be different that the example shown in FIGs. 3A and 3B.

The counterforce mass member 385 may be positioned on the counterweight 380, on one side of the orbit radius axis RA opposite the remainder of the counterweight 380, to increase the weight on the one side of the counterweight 380. The additional mass added to the one side of the counterweight 380 by the counterforce mass member 385 may counteract imbalance and vibration generated by the rotating masses, that is, the rotation of the structure including the eccentric sleeve 350, bearing retainer 340 and platen 360, thus reducing vibration of the tool 300 engaged with a workpiece during operation.

As discussed above, in the example implementation shown in FIGs. 2A-2C, the counterweight 280 is offset by the offset angle θ to counteract imbalance and vibration generated by the rotating masses (for example, rotation of the structure including the eccentric sleeve 250, bearing retainer 240 and platen 260). In the example implementation shown in FIGs. 3A and 3B, the counterforce mass member 385 provided on the counterweight may counteract the imbalance and vibration generated by the rotating masses, without this type of angular offset of the counterweight 380.

The counterweight 380 and the counterforce mass member 385 may work together to counteract the imbalance and vibration generated by the rotating masses, and may reduce vibration of the tool 300 engaged with a workpiece during operation. In some embodiments, arrangement of the counterweight 380 and the counterforce mass member 385 so that a portion of the counterforce mass is located as close to the plane of the workpiece as possible, with the counterweight 380 and the counterforce mass member 385 positioned to counteract imbalance due to vibration generated by the rotating masses, may reduce vibration by up to approximately 40%, as discussed in detail above, so that when the tool 400 is actively engaged with a workpiece during operation, vibration may be less than approximately 2.5 m/s².

## Claims

1. A power tool (10; 200), comprising:
a housing (11; 210);
a motor (230) in the housing;
a drive shaft (12; 220), a first end portion of the drive shaft (12; 220) being coupled to the motor (230);
a platen (16; 260);
a retainer bearing (14; 240) coupled to a first surface (260A) of the platen (16; 260);
an eccentric sleeve (15) coupled to a second end portion of the drive shaft, the eccentric sleeve being coupled in the retainer bearing to eccentrically couple the drive shaft to the platen;
an eccentric mass, including the eccentric sleeve (15; 250), the retainer bearing (14; 240) and the platen (16; 260) coupled to the second end portion of the drive shaft (12; 220); and
a counterweight (18; 280) coupled to the second end portion of the drive shaft (12; 240), between the first surface (260A) of the platen (16; 260) and the eccentric sleeve (15; 250),
wherein the counterweight (18; 280) is positioned such that a counterweight axis (CA) defined along a radial centerline of the counterweight is offset by a predetermined angle (θ) with respect to an orbit radius axis (RA) of the eccentric mass;
wherein the counterweight axis (CA) is be defined by a line radially bisecting the counterweight (280), with an angle θ formed between the orbit radius axis (RA) and the counterweight axis (CA);
wherein the orbit radius is defined by a distance between the driven shaft centerline (220A) and the eccentric mass centerline (250A), with an orbit radius axis (RA) defined by a line extending laterally through the longitudinally extending driven shaft centerline (220A) and the longitudinally extending eccentric mass centerline (250A);
wherein a second surface of the platen (16; 260), opposite the first surface (260A) of the platen (16; 260), faces an exterior of the tool, the second surface of the platen being configured to receive an abrasive sheet (265) engaging a finishing surface of a workpiece during operation of the power tool; and
wherein the counterweight (18; 280) is configured to counteract forces generated due to interaction between the abrasive sheet (265) and the finishing surface based on the position of the counterweight (18; 280), the position of the counterweight (18; 280) being offset by the predetermined angle with respect to the orbit radius axis (RA), and the counterweight (18; 280) being positioned adjacent to the first surface (265) of the platen (16, 260) and proximate the second surface of the platen (16; 260) and the abrasive sheet (265) coupled thereto;
**characterised in that** the predetermined angle is greater than 3.0 degrees and less than or equal to 9.0 degrees.

2. The power tool of claim 1, wherein the orbit radius axis (RA) is defined by a line extending laterally through a longitudinally extending centerline of the drive shaft (220A) and a longitudinally extending centerline of the eccentric mass (250A).

3. The power tool of claim 1, wherein the predetermined angle is greater than 3.0 degrees and less than or equal to 6.0 degrees.

4. The power tool of claim 1, wherein the predetermined angle is determined based on an orbit radius defined by a lateral distance between a longitudinally extending centerline of the drive shaft (12, 220) and a longitudinally extending centerline of the eccentric mass.

## Patentansprüche

1. Elektrowerkzeug (10; 200), umfassend:
ein Gehäuse (11; 210);
einen Motor (230) in dem Gehäuse;
eine Antriebswelle (12; 220), wobei ein erster Endabschnitt der Antriebswelle (12; 220) mit dem Motor (230) gekoppelt ist;
eine Platte (16; 260);
ein Halterungslager (14; 240), das mit einer ersten Oberfläche (260A) der Platte (16; 260) gekoppelt ist;
eine exzentrische Hülse (15), die mit einem zweiten Endabschnitt der Antriebswelle gekoppelt ist, wobei die exzentrische Hülse in dem Halterungslager gekoppelt ist, um die Antriebswelle exzentrisch mit der Platte zu koppeln;
eine exzentrische Masse, welche die exzentrische Hülse (15; 250), das Halterungslager (14; 240) und die Platte (16; 260) einschließt, die mit dem zweiten Endabschnitt der Antriebswelle (12; 220) gekoppelt ist; und
ein Gegengewicht (18; 280), das mit dem zweiten Endabschnitt der Antriebswelle (12; 240) zwischen der ersten Oberfläche (260A) der Platte (16; 260) und der exzentrischen Hülse (15; 250) gekoppelt ist,
wobei das Gegengewicht (18; 280) so positioniert ist, dass eine Gegengewichtsachse (CA), die entlang einer radialen Mittellinie des Gegengewichts definiert ist, um einen vorbestimmten Winkel (Θ) in Bezug auf eine Bahnradiusachse (RA) der exzentrischen Masse versetzt ist;
wobei die Gegengewichtsachse (CA) durch eine Linie definiert wird, die das Gegengewicht (280) radial halbiert, wobei ein Winkel Θ zwischen der Bahnradiusachse (RA) und der Gegengewichtsachse (CA) gebildet wird;
wobei der Bahnradius durch einen Abstand zwischen der Mittellinie (220A) der angetriebenen Welle und der Mittellinie der exzentrischen Masse (250A) definiert ist, wobei eine Bahnradiusachse (RA) durch eine Linie definiert ist, die sich seitlich durch die sich in Längsrichtung erstreckende Mittellinie (220A) der angetriebenen Welle und die sich in Längsrichtung erstreckende Mittellinie (250A) der exzentrischen Masse erstreckt;
wobei eine zweite Oberfläche der Platte (16; 260), die der ersten Oberfläche (260A) der Platte (16; 260) gegenüberliegt, einer Außenseite des Werkzeugs zugewandt ist, wobei die zweite Oberfläche der Platte konfiguriert ist, um ein Schleifblatt (265) aufzunehmen, das mit einer Endbearbeitungsoberfläche eines Werkstücks während des Betriebs des Elektrowerkzeugs in Eingriff kommt; und
wobei das Gegengewicht (18; 280) konfiguriert ist, um Kräften entgegenzuwirken, die aufgrund der Wechselwirkung zwischen dem Schleifblatt (265) und der Endbearbeitungsoberfläche basierend auf der Position des Gegengewichts (18; 280) erzeugt werden, wobei die Position des Gegengewichts (18; 280) um den vorbestimmten Winkel in Bezug auf die Bahnradiusachse (RA) versetzt ist und das Gegengewicht (18; 280) angrenzend an die erste Oberfläche (265) der Platte (16; 260) und nahe der zweiten Oberfläche der Platte (16; 260) und des daran gekoppelten Schleifblatts (265) positioniert ist;
**dadurch gekennzeichnet, dass** der vorbestimmte Winkel größer als 3,0 Grad und kleiner als oder gleich 9,0 Grad ist.

2. Elektrowerkzeug nach Anspruch 1, wobei die Bahnradiusachse (RA) durch eine Linie definiert ist, die sich seitlich durch eine in Längsrichtung verlaufende Mittellinie der Antriebswelle (220A) und eine in Längsrichtung verlaufende Mittellinie der exzentrischen Masse (250A) erstreckt.

3. Elektrowerkzeug nach Anspruch 1, wobei der vorbestimmte Winkel größer als 3,0 Grad und kleiner oder gleich 6,0 Grad ist.

4. Elektrowerkzeug nach Anspruch 1, wobei der vorbestimmte Winkel basierend auf einem Bahnradius bestimmt wird, der durch einen seitlichen Abstand zwischen einer in Längsrichtung verlaufenden Mittellinie der Antriebswelle (12, 220) und einer in Längsrichtung verlaufenden Mittellinie der exzentrischen Masse definiert ist.

## Revendications

1. Outil électrique (10 ; 200), comprenant :
un boîtier (11 ; 210) ;
un moteur (230) dans le boîtier ;
un arbre d'entraînement (12 ; 220), une première portion d'extrémité de l'arbre d'entraînement (12 ; 220) étant couplée au moteur (230) ;
un plateau (16 ; 260) ;
un palier de retenue (14; 240) couplé à une première surface (260A) du plateau (16 ; 260) ;
un manchon excentrique (15) couplé à une seconde portion d'extrémité de l'arbre d'entraînement, le manchon excentrique étant couplé dans le palier de retenue pour coupler excentriquement l'arbre d'entraînement au plateau ;
une masse excentrique, incluant le manchon excentrique (15 ; 250), le palier de retenue (14 ; 240) et le plateau (16 ; 260) couplés à la seconde portion d'extrémité de l'arbre d'entraînement (12 ; 220) ; et
un contrepoids (18 ; 280) couplé à la seconde portion d'extrémité de l'arbre d'entraînement (12 ; 240), entre la première surface (260A) du plateau (16 ; 260) et le manchon excentrique (15 ; 250),
dans lequel le contrepoids (18 ; 280) est positionné de sorte qu'un axe de contrepoids (CA) défini le long d'une ligne médiane radiale du contrepoids soit décalé d'un angle prédéterminé (θ) par rapport à un axe de rayon d'orbite (RA) de la masse excentrique ;
dans lequel l'axe de contrepoids (CA) est défini par une ligne en bissection radiale avec le contrepoids (280), avec un angle θ formé entre l'axe de rayon d'orbite (RA) et l'axe de contrepoids (CA) ;
dans lequel le rayon d'orbite est défini par une distance entre la ligne médiane d'arbre entraîné (220A) et la ligne médiane de masse excentrique (250A), avec une ligne de rayon d'orbite (RA) définie par une ligne s'étendant latéralement à travers la ligne médiane d'arbre entraîné s'étendant longitudinalement (220A) et la ligne médiane de masse excentrique s'étendant longitudinalement (250A) ;
dans lequel une seconde surface du plateau (16 ; 260), à l'opposé de la première surface (260A) du plateau (16 ; 260), fait face à un extérieur de l'outil, la seconde surface du plateau étant configurée pour recevoir une feuille abrasive (265) se mettant en prise avec une surface de finition d'une pièce d'ouvrage au cours d'un fonctionnement de l'outil électrique ; et
dans lequel le contrepoids (18 ; 280) est configuré pour neutraliser des forces générées sous l'effet d'une interaction entre la feuille abrasive (265) et la surface de finition sur la base de la position du contrepoids (18 ; 280), la position du contrepoids (18 ; 280) étant décalée de l'angle prédéterminé par rapport à l'axe de rayon d'orbite (RA), et le contrepoids (18 ; 280) étant positionné adjacent à la première surface (265) du plateau (16, 260) et à proximité de la seconde surface du plateau (16 ; 260) et de la feuille abrasive (265) couplée à celle-ci ;
**caractérisé en ce que** l'angle prédéterminé est supérieur à 3,0 degrés et inférieur ou égal à 9,0 degrés.

2. Outil électrique selon la revendication 1, dans lequel l'axe de rayon d'orbite (RA) est défini par une ligne s'étendant latéralement à travers une ligne médiane s'étendant longitudinalement de l'arbre d'entraînement (220A) et une ligne médiane s'étendant longitudinalement de la masse excentrique (250A).

3. Outil électrique selon la revendication 1, dans lequel l'angle prédéterminé est supérieur à 3,0 degrés et inférieur ou égal à 6,0 degrés.

4. Outil électrique selon la revendication 1, dans lequel l'angle prédéterminé est déterminé sur la base d'un rayon d'orbite défini par une distance latérale entre une ligne médiane s'étendant longitudinalement de l'arbre d'entraînement (12, 220) et une ligne médiane s'étendant longitudinalement de la masse excentrique.
